# EUROPEAN PATENT APPLICATION

(11) **EP 2 209 156 A1**
(43) Date of publication of application: **21.07.2010**
(21) Application number: 09179547.6
(22) Date of filing: 17.12.2009
(51) Int. Cl.: H01M 8/10

(54) **Composite membrane and method for making**

(30) Priority: 26.12.2008 US 344296
(71) Applicant: General Electric Company, Schenectady, NY 12345 (US)
(72) Inventor: Moore, David Roger, Albany, NY 12203 (US); Klare, Robert John, Saint Joseph, MO 64505 (US); Deyoung, James, Dallas, TX 75214 (US)
(74) Representative: Szary, Anne Catherine

(57) **Abstract**

A composite membrane includes a compatibilized porous base membrane and an ion exchange material, which is impregnated into the compatibilized porous base membrane. The base membrane is compatibilized by coating a primer to external and internal surfaces of the porous base membrane and crosslinking the primer. A method for making the membrane, a proton exchange membrane for a fuel cell and a method form making the proton exchange membrane are also provided. The composite membrane is durable, compatible, highly conductive and mechanically stable.

## Description

### FIELD OF THE INVENTION

This invention relates generally to composite porous membranes, and more particularly, to composite porous membranes compatible with ion exchange materials.

### BACKGROUND OF THE INVENTION

Solid polymer electrolyte membrane (PEM) fuel cells have attracted significant attention as a reliable, clean source of energy, particularly, for transportation and portable devices. Hydrogen PEM fuel cells generate electricity (that can be converted to power) through the electrochemical coupling of hydrogen and oxygen. Water and heat are the only by-products. Fuel cell technology has made significant progress over the last fifty years; however, improved high-performance membrane materials are still needed for developing state-of-the-art fuel cell devices with wide ranging applications.

Fuel cell membranes must have long-term thermal, mechanical and chemical stability under harsh fuel cell conditions. Long lifetimes are directly proportional to the physical properties of the membrane; hence, research efforts have targeted polymer systems that yield robust membranes. A key obstacle to achieving high performance and mechanically stable polymer electrolyte membranes (PEM) is effective water management. One method for better water management is to modulate the membrane with a more mechanically stable porous support (i.e., composite membranes). This prevents excessive shrinkage and swelling and provides a more durable membrane.

It is desirable to use hydrophobic and inert materials for the porous base membrane, as hydrophobic materials have minimal swelling in aqueous media, which contributes to enhanced mechanical and chemical stability. Unfortunately, an inert hydrophobic base membrane is not typically compatible with ion exchange material, which is hydrophilic (i.e., sulfonic acid-containing polymers). Incompatibility between the materials of the base membrane and the ion exchange materials can cause membrane defects, such as holes in the membrane, because there is poor interfacial interactions between the base membrane and the ion exchange materials.

What is needed is an improved composite membrane having materials compatible with the ion exchange material.

### BRIEF DESCRIPTION OF THE INVENTION

In one embodiment, a composite membrane is provided. The composite membrane includes a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.

In another embodiment, a method of making a composite membrane with ion exchange properties is provided. The method includes compatibilizing a porous base membrane and impregnating the compatibilized porous base membrane with an ion exchange material, wherein the porous base membrane is compatibilized by coating a primer to external and internal surfaces of the porous base membrane crosslinking the primer.

In another embodiment, a proton exchange membrane for a fuel cell is provided. The proton exchange membrane includes a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.

In another embodiment, a method of making a proton exchange membrane for a fuel cell is provided. The method includes compatibilizing a porous base membrane and impregnating the compatibilized porous base membrane with an ion exchange material, wherein the porous base membrane is compatibilized by coating a primer to external and internal surfaces of the porous base membrane crosslinking the primer.

The various embodiments provide a more compatible and more durable membrane that has increased performance, is highly conductive and mechanically stable.

### BRIEF DESCRIPTION OF THE DRAWINGS

Figure 1 is a plan schematic view of a base membrane.
Figure 2 is a schematic view of a composite membrane in accordance with an embodiment of the present invention.
Figure 3 is a sectional schematic illustration of a proton exchange membrane that includes the composite membrane shown in Figure 1.

### DETAILED DESCRIPTION OF THE INVENTION

The singular forms "a," "an" and "the" include plural referents unless the context clearly dictates otherwise. The endpoints of all ranges reciting the same characteristic are independently combinable and inclusive of the recited endpoint. All references are incorporated herein by reference.

The modifier "about" used in connection with a quantity is inclusive of the stated value and has the meaning dictated by the context (e.g., includes the tolerance ranges associated with measurement of the particular quantity).

"Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present.

A composite membrane and a method of making the composite membrane are discussed in detail below. The composite membrane can be used in a filter apparatus or as a proton exchange membrane material in a fuel cell.

In one embodiment, a composite membrane includes a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.

The ion exchange material provides ion exchange properties to the membrane and may be any type of conventional ion exchange material. In one embodiment, the ion exchange material is an ionomer. Ionomers may be any type of material capable of effectively conducting protons. In one embodiment, the ionomers include fluorocarbon-based ionomers and non-fluorocarbon-based ionomers. Suitable fluorocarbon-based ionomers include, but are not limited to, perfluorosulfonic acid ionomers, aromatic polymers including fluoroalkylsulfonate groups, partially fluorinated sulfonated ionomers and perfluoroalkyl-based ionomers. Aromatic polymers having fluoroalkylsulfonate groups include polyarylenes bearing fluoroalkyl groups, covalently bound to a sulfonic acid group. The alkyl groups in the fluoroalkyl groups are C₁-C₃₀ alkyl groups. In one embodiment, the polyarylenes include polysulfone, polyimide, polyphenylene oxide, polyphenylene sulfide sulfone, polyphenylene, polyparaphenylene, polyphenylquinoxaline, polyarylketone and polyetherketone. Polysulfones include, but are not limited to, polyethersulfone, polyetherethersulfone, polyarylsulfone, polyarylethersulfone, polyphenylsulfone and polyphenylenesulfone. Polyimides include, but are not limited to, polyetherimides and fluorinated polyimides. Polyetherketones include, but are not limited to, polyetherketone, polyetheretherketone, polyetherketone-ketone, polyetheretherketone-ketone and polyetherketoneetherketone-ketone.

Perfluoroalkyl-based ionomers include highly fluorinated ionomers having sulfonic or carboxylic ionic functional groups, such as polytetrafluoroethylene sulfonic acid. Perfluoroalkyl-based ionomers may be a polyperfluorosulfonic acid ionomer, which is commercially available from E. I. DuPont de Nemours & Co. as NAFION^{®}, Aciplex^{®}, which is commercially available from Asahi Chemical, Flemion^{®}, which is commercially available from Asahi Glass and other fluorocarbon ionomers from Dow Chemical Corporation.

In one embodiment, the ionomer is a NAFION® polyperfluorosulfonic acid ionomer having the structure: 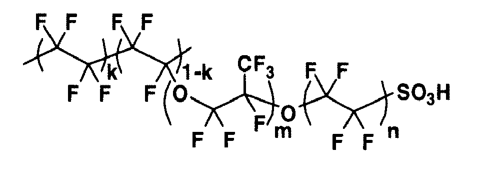 wherein k is in the range of from about 0 to about 0.99.
m is in the range of from about 0 to about 10.
n is in the range of from about 1 to about 5.

In another embodiment, k is in the range of from about 0.5 to about 0.95. In another embodiment, m is in the range of from about 0 to about 2. In another embodiment, n is in the range of from about 1 to about 5.

In another embodiment, the ionomer is a sulfonyl fluoride version of Nafion® having the structure: 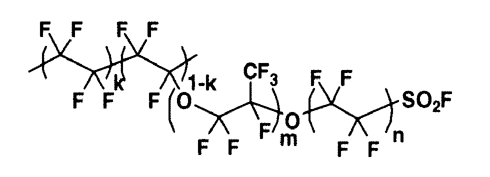 wherein k is in the range of from about 0 to about 0.99;
m is in the range of from about 0 to about 10; and
n is in the range of from about 1 to about 5.

In another embodiment, k is in the range of from about 0.5 to about 0.95. In another embodiment, m is in the range of from about 0 to about 2. In another embodiment, n is in the range of from about 1 to about 5.

Partially fluorinated sulfonated ionomers include, but are not limited to sulfonated styrene polyvinylidene difluoride (PVDF)-based copolymers, poly(α,β,β₃-trifluoromethylstyrene sulfonic acid) and aromatic polymers containing organic fluorosulfonic acid groups or derivatives thereof (as described in copending U.S. Patent Application No. 11/598,948 filed on November 14, 2006, Publication No. 2008/0114149 A1) derived from monomers having the structure: 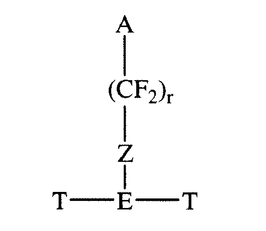 wherein E is a C₅-C₅₀ aromatic radical;
Z is a bond, O, S, SO, SO₂, a C₁-C₂₀ aliphatic radical, a C₃-C₄₀ aromatic radical, or a C₄-C₂₀ cycloaliphatic radical;
A is a sulfonate moiety selected from the group consisting of a sulfonic acid moiety, a salt of a sulfonic acid moiety having formula SO₃M wherein M is an inorganic cation, or an organic cation, and a sulfonate ester moiety having formula SO₃R¹, wherein R¹ is a C₁-C₂₀ aliphatic radical, a C₃-C₂₀ aromatic radical, or a C₄-C₂₀ cycloaliphatic radical;
T is a functional group selected from the group consisting of hydroxyl, amine, carboxylic acid, carboxylic acid ester, and thiol; and
r is an integer ranging from 1 to 20.

In one embodiment, a partially fluorinated sulfonated ionomer has the following structures: 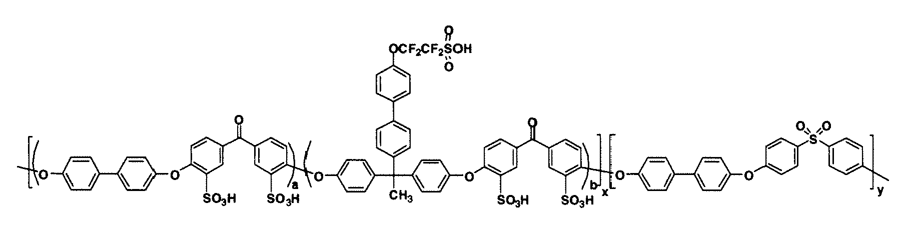 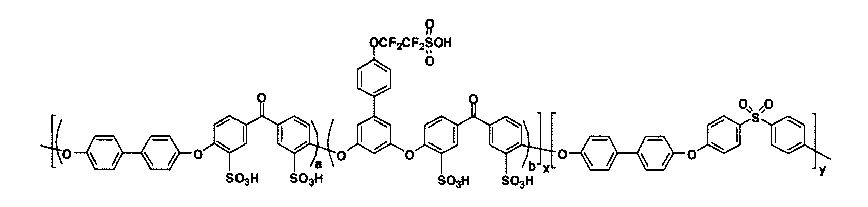 wherein a, b, x and y are each independently integers in the range of from 1 to 1000 with the proviso that a + b = x.

Non-fluorocarbon-based ionomers for use as ion exchange material include, but are not limited to, sulfonated aromatic polymers, such as sulfonated polystyrene, polyimidazole with phosphoric acid, sulfonated polyethersulfone, sulfonated poly(ether etherketones) (PEEK), sulfonated polypropylene oxide, sulfonated polyimides, sulfonated polyetherimides, sulfonated polyesters, chlorosulfonated polyethylene and sulfonated poly(phenylene sulfide).

The composite membrane includes a porous base membrane, which has a plurality of pores. In one embodiment, the base membrane has a three-dimensional matrix or lattice type structure with a plurality of nodes interconnected by a plurality of fibrils. The interconnections between the nodes and fibrils define the pores in the base membrane, which are open spaces or voids. The surfaces of the nodes and fibrils define numerous interconnecting pores that extend completely through the membrane.

The pore sizes in the base membrane may be any size. In one embodiment, the average pore size of the pores in the base membrane is microporous. In another embodiment, the average pore size is in the range of about 0.01 micron to about 10 microns, and in another embodiment, the average pore size is in the range of about 0.1 micron to about 5.0 microns.

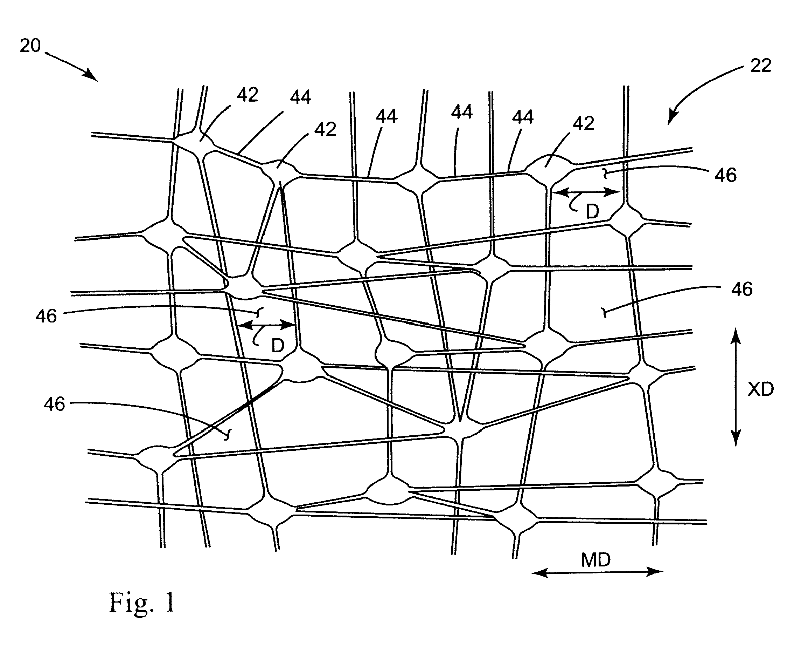

Figure 1 is a plan view of a composite membrane 20. A base membrane 22 is porous, and in one embodiment, microporous, with a three-dimensional matrix or lattice type structure including a plurality of nodes 42 interconnected by a plurality of fibrils 44. Surfaces of nodes 42 and fibrils 44 define numerous interconnecting pores 46 that extend completely through membrane 22 between opposite major side surfaces in a tortuous path. In one embodiment, an average pore size D for pores 46 in base membrane 22 is in the range of about 0.01 micron to about 10 microns, and in another embodiment, in the range of about 0.1 micron to about 5.0 microns.

The base membrane may be any material or blend of materials that is suitable for forming a base membrane with an open pore structure. In one embodiment, the base membrane includes, but is not limited to, polytetrafluoroethylene, polyolefin, polyamide, polyester, polysulfone, polyether, acrylic and methacrylic polymers, polystyrene, polyurethane, polypropylene, polyethylene, polyphenylene sulfone, cellulosic polymer and combinations thereof. In an exemplary embodiment, the porous base membrane comprises expanded polytetrafluoroethylene (ePTFE).

In one exemplary embodiment, the base membrane is made by extruding a mixture of polytetrafluoroethylene (PTFE) fine powder particles and lubricant. The extrudate is then calendered. The calendered extrudate is then "expanded" or stretched in at least one and preferably two directions, MD and XD, to form fibrils and connecting nodes to define a three-dimensional matrix or lattice type of structure. "Expanded" is intended to mean sufficiently stretched beyond the elastic limit of the material to introduce permanent set or elongation to the fibrils.

The base membrane may be heated or "sintered" to reduce and minimize residual stress in the membrane material by changing portions of the material from a substantially crystalline state to a substantially amorphous state. In one embodiment, the base membrane is unsintered or partially sintered. In another embodiment, the porous base membrane comprises expanded polytetrafluoroethylene that has been at least partially sintered. Generally, the size of a fibril that has been at least partially sintered may be in the range of about 0.05 micron to about 0.5 micron in diameter taken in a direction normal to the longitudinal extent of the fibril. The specific surface area of the porous base membrane may be in the range of about 9 square meters per gram of membrane material to about 110 square meters per gram of membrane material.

Other suitable methods of making the base membrane include foaming, skiving or casting any of the suitable materials. In another embodiment, the base membrane is formed from woven or non-woven fibers of the above described materials, such as ePTFE.

In one embodiment, the base membrane has a thickness from about 0.06 mil to about 10 mils. In another embodiment, the base membrane has a thickness from about 0.50 mil to about 5 mils. In another embodiment, the base membrane has a thickness from about 0.8 mil to about 3 mils.

Many ion exchange materials are incompatible with the porous base membrane and have poor surface interaction with the membrane, which can lead to holes or voids in the composite membrane. The porous base membrane may be compatibilized to improve the interfacial consistency between the base membrane and the ion exchange material, reduce internal membrane resistance and mitigate overall membrane defects. In one embodiment, the porous base membrane is coated with a primer and the primer is crosslinked. The crosslinked primer serves to compatibilize the porous base membrane by stabilizing the interface between the hydrophobic porous base membrane and the hydrophilic ion exchange material.

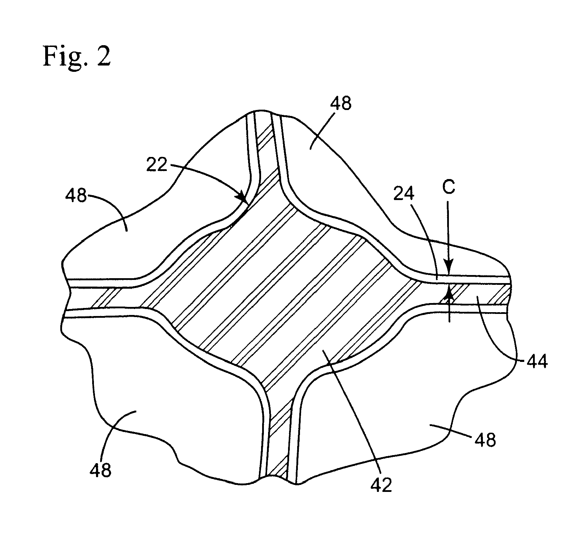

The primer is applied to the base membrane to coat the external surfaces of the membrane and to infiltrate into the pores of the base membrane to coat the internal surfaces of the membrane. In an exemplary embodiment, Figure 2 is a schematic view of a composite membrane 20. A primer 24 is disposed on and around the surfaces of the nodes 42 and fibrils 44 that define the interconnecting pores 46 extending through the base membrane 22. The deposited primer 24 adheres to surfaces of nodes 42 and fibrils 44 that define the external and internal surfaces of the base membrane 22. In one exemplary embodiment, primer 24 is deposited on the surfaces of the nodes 42 and fibrils 44 by precipitation. In one embodiment, the primer is a thin layer having a uniformly even thickness C.

The primer may be coated to the base membrane by any known method. In one embodiment, the primer may be coated by solution deposition, high pressure solution deposition, vacuum filtration, painting, gravure coating and air brushing. In one embodiment, the primer is coated to the base membrane using a densified fluid, for example, a supercritical fluid or a near critical fluid, as a solvent.

In another embodiment, the primer is coated by supercritical carbon dioxide deposition. The primer is dissolved or dispersed in a fluid containing gaseous carbon dioxide at a high pressure, which is greater than ambient and typically, at least about 20 bar. In one embodiment, the pressure is from about 20 bar to about 500 bar. In one embodiment, the carbon dioxide is utilized in a dense or supercritical phase where the carbon dioxide has a density greater than critical density, which is typically greater than about 0.5/cc. The carbon dioxide solution contacts and wets the base membrane. The primer may be precipitated out of the solution and the primer adheres to the surface of and coats the base membrane. Supercritical carbon dioxide deposition is described in United States Patent No. 6,030,663, which is incorporated herein by reference.

The primer may be applied to the base membrane in various amounts. In one embodiment, the primer has a uniform thickness in a range of from about 1.0 nanometer to about 500 nanometers, including a range of about 1.0 nanometer to about 100 nanometers. In another embodiment, the primer is applied to the base membrane in an amount of from about 1 to about 5 percent by weight based on the weight of the base membrane.

The primer comprises any material suitable for improving the interfacial consistency between the base membrane and the ion exchange material. In one embodiment, the primer is a fluorinated vinyl-based copolymer having sulfonyl functionality, for example, a vinylidene difluoride (VF₂) and sulfonated perfluoroalkyl vinyl ether copolymer having the structure: 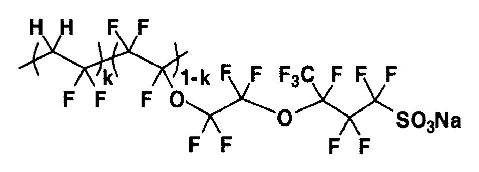 wherein k is from about 0 to about 0.99. In another embodiment, k is from about 0.5 to about 0.9. The sulfonyl fluoride and sulfonic acid analog may also be used as a primer.

In another embodiment, the primer is a hydrocarbon-based polymer containing random sulfonation, such as polyethersulfones containing units derived from sulfonated bis(halophenyl) sulfones, dihydroxy terphenyls and/or bis(hydroxyphenyl)pyridines (as described in U.S. Patent Application Publication No. 2006/0030683 A1, which is incorporated herein by reference), benzimidazole-containing sulfonated polyether sulfones (as described in U.S. Patent Application Publication No. 2007/0100131 A1, which is incorporated herein by reference), polyethersulfones containing a trifluorovinyloxy group (as described in copending U.S. Patent Application No. 11/397109 filed on April 5, 2006, Publication No. 2007/0238856 A1) and polymers containing organic fluorosulfonic acid groups or derivatives thereof (as described in copending U.S. Patent Application No. 11/598948 filed on November 14, 2006, Publication No. 2008/0114149 A1).

In another embodiment, the primer is a hydrocarbon-based polymer containing blocky, mixed or gradient sulfonation, such as sulfonated polyaryletherketone-polyethersulfone block copolymers (as described in copending U.S. Patent Application No. 11/479202 filed on July 3, 2006, U.S. Patent Application Publication No. 2007/0142614 A1, U.S. Patent Application Publication No. 2007/0142613 A1 and copending U.S. Patent Application No. 11/598948 filed on November 14, 2006, all of which are incorporated herein by reference).

In another embodiment, the primer is a partially fluorinated block copolymer containing a sulfonated hydrophilic segment and a hydrophobic fluorinated segment. In one embodiment, these perfluorosulfonic materials may be perfluorosulfonic acid, sodium sulfonated-perfluorosulfonic acid, sulfonyl fluoride-perfluorosulfonic acid and sodium perfluorosulfonate polymer.

In another embodiment, the primer may be vinylic-based, acrylic-based or styrenic-based polymers and copolymers. In this case, exemplary polymers may be partially fluorinated, having between about 20% and about 75% fluorine by weight, and have available functional groups that can be chemically or thermally converted to form strong polar hydrogen-bonding functional groups such as hydroxyl (-OH) groups, acid groups (-COOH), sulfonyl groups (SO₂X) where X is a halogen, or sulfonic acid groups (SO₃H). Other exemplary polymers include poly(vinyl acetate)-based polymers that can be thermally or chemically converted to form poly(vinyl alcohol) polymers (e.g., Celvol^{®} 165 as available from Celanese Ltd.) deposited on the base membrane.

In one embodiment, the primer has amine functionality. The amine functionality reacts with sulfonic acids in the ion exchange material to form ionic salts, which provides a physical crosslink to improve better permanence between the primer and the ion exchange material. Physical crosslinking can also be achieved with primer materials having amine functionality through acid-base couplings with the sulfonic acid moieties in the ion exchange material.

In one embodiment, the polymers having amine functionality may be polyethyleneimine (PEI), polyvinylpyridine (PVP), polyvinylamine or other polyaromatic materials, such as those described in U.S. Patent Application Publication No. 2006/0030683 A1 or U.S. Patent Application Publication No. 2007/0100131, which are incorporated herein by reference. In another embodiment, the primer may be a mixture of the polymers having amine functionality and poly(vinyl alcohol), such as poly(vinyl alcohol)-polyvinylamine copolymers commercially available from Celanese Ltd. Examples of poly(vinyl alcohol)-polyvinylamine copolymers are PVOH/PVAm M12, PVOH/PVAm L12 and PVOH/PVAm M6, which are commercially available from Celanese Ltd. In one embodiment, polyvinylamine may be sulfonated or carboxylated. In another embodiment, the primer may be polyvinyl alcohol, such as Celvol^{®} 165 from Celanese Ltd., sulfonated polyvinyl alcohol, such as Vytek^{®} 2000 from Celanese Ltd. and carboxylated polyvinyl alcohol, such as Vytek^{®} 4000 from Celanese Ltd.

In one embodiment, the primer is a vinylidene difluoride co-polymer, which may be coated to the base membrane in the sulfonyl fluoride form and then converted to the sulfonic acid form on the base membrane. In one exemplary embodiment, trimethyl silanoate sodium salt in polar solvents is used to chemically convert the sulfonyl fluoride. Once converted to the sulfonate derivative, the primer may be acidified in sulfuric acid or the like to form a sulfonic acid functional coating. The acidified primer provides interactions between the base membrane and the ion exchange material. The sulfonyl fluoride or sulfonate moiety may be converted to the sulfonic acid group before impregnation with the ion exchange material, or after impregnation of the ion exchange material.

The deposited primer may be further processed, if needed, such as by heating or by chemical conversion, which may be acid or base catalyzed de-protection, acid, base, or thermally induced hydrolysis or saponification, or other suitable process. In one embodiment, the primer is coated in a pre-converted state. Once coated onto the base membrane, the primer may be converted to a polar hydrogen bonding state.

The coated primer may be crosslinked to compatibilize the porous base membrane. The crosslinked primer forms an irreversible interpenetrating network or cross-linked polymeric structure that mechanically binds the primer to the base membrane by interlinking with the polymer of the base membrane. Crosslinking aids in adhering the primer to the membrane and preventing the primer from washing off or wearing away during subsequent processes. The primer is crosslinked in any conventional manner, such as thermally, by UV, e-beam, corona, plasma and chemically. The primer may be crosslinked with itself, with the porous base membrane, with the ion exchange material or any combination of the foregoing. In one embodiment, the primer is crosslinked after the membrane is primed and the ion exchange material has been applied. Prior to crosslinking, the membrane may be passed between two heated calendar rolls to remove any voids or pinholes that formed while preparing the composite membrane.

In one embodiment, the primer is crosslinked with a crosslinking agent. The crosslinking agent may be any conventional material suitable for crosslinking. The crosslinking agent may become part of the polymer matrix, or may be a di-, tri- or multi-functionalized crosslinking agent separate from the polymer matrix, or may be a combination of both types. In another embodiment, a crosslinking agent functions as a catalyst to promote cross-linking of reactive or functional groups, but is not chemically bound into the matrix. In one embodiment, the crosslinking agent is an isocyanurate, a blocked isocyanurate, a urethane, acrylates, methacrylates, vinyl, allyl, vinyl ethers, perfluorovinyl ether, bis-benzocyclobutenes, vinylketones, acetylenes, cyanoesters, or benzyl and benzyl ethers. In another embodiment, the crosslinking agent is triallylisocyanurate.

In another embodiment, the crosslinking agent may include one or more urethanes or blocked isocyanates. Suitable blocked isocyanates may include a blocking agent, and one or more of aromatic polyisocyanates, aliphatic polyisocyanates, and/or cycloaliphatic polyisocyanates. In one embodiment, the polyisocyanates include one or more of toluene di-isocyanate, diphenyl methane di-isocyanate, hexamethylene di-isocyanate, methylene bis-(4-cyclohexylisocyanate), naphthalene di-isocyanate, polymethylene polyphenyl isocyanate, meta tetramethylxylylene di-isocyanate, or dimethyl meta-isopropenyl benzyl isocyanate. In one embodiment, the crosslinking agent comprises hexamethylene di-isocyanate or methylene bis-(cyclohexyl isocyanate).

Toluene di-isocyanate (TDI) may be a room temperature liquid and is commercially available as a mixture of 2,4 and 2,6 isomers. In one commercial grade, TDI is available as 80% 2,4-TDI / 20% 2,6-TDI and 65% 2,4-TDI / 35% 2,6-TDI. Diphenyl methane di-isocyanate (MDI) may be a room temperature solid. Modified MDI may be made by converting some of the isocyanate groups into carbodiimide groups, which may react with excess isocyanate. Liquid MDI may be made by the reaction of a diisocyanate with small amounts of glycols.

Hexamethylene di-isocyanate (HDI) (1,6- diisocyanate hexane) may be a room temperature liquid. At least two types of polyisocyanates may be made from HDI: HDI-biuret type, and Isocyanurate type HDI. HDI-biuret type is a homopolymer of HDI (or polymeric HDI), and may be obtained by treating HDI with water. HDI-biuret may contain less than about 0.7 % HDI. HDI-Isocyanurates may contain less than 0.3% HDI when first produced. HDI and its polymers may be soluble in non-polar solvents, such as xylene and toluene. HDI may be expressed by the structure:

OCN-(CH₂)₆-NCO

Methylene bis-(4-cyclohexylisocyanate) (HMDI) and its polymers may be soluble in non-polar solvents, such as xylene and toluene. HMDI may be expressed by the structure:

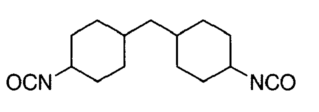

Naphthalene di-isocyanate (NDI) and methyl isocyanate (MIC) may be room temperature solids. Polymethylene polyphenyl isocyanate (PMPPI) may be a room temperature liquid, and may include from about 40 weight percent to about 60 weight percent of 4,4'-MDI, the remainder being other isomers of MDI (e.g., 2,4' and 2') trimeric species and higher molecular weight oligomers.

Another suitable isocyanate may include a material having the structure:

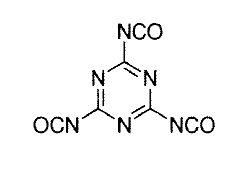

Suitable blocked isocyanates may be commercially available, and/or may be formed from, for example, a reaction of an isocyanate with a blocking agent, such as malonic ester. Other suitable blocking agents may include one or more amines, such as diisopropyl amine (DIPA) or t-butyl benzyl amine (BEBA). Yet other suitable blocking agents may include one or more of 3,5-dimethyl pyrazole; methyl ethyl ketoxime; caprolactam; or alkylated phenol.

Some blocking agents may unblock in response to the application of heat. For example, 3,5-dimethyl pyrazole may unblock at 110 degrees Celsius; methyl ethyl ketoxime may unblock at 150 degrees Celsius; malonic acid esters may unblock at 90 degrees Celsius; caprolactam may unblock at 160 degrees Celsius; and alkylated phenol may unblock at greater than about 110 degrees Celsius. Optional accelerators, when present, may decrease the unblocking temperature to as low as about room temperature.

In one embodiment, the urethane may include a material having the structure: 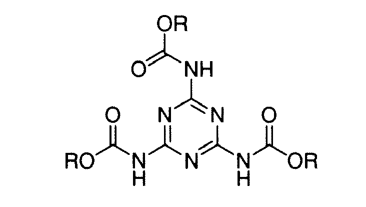 wherein R is independently at each occurrence a C₁ to C₄ alkyl (e.g., methyl or butyl) at a 60/40 ratio.

Examples of suitable urethanes include CYMEL® 1158 or CYLINK® 2000, which are commercially available from Cytec Engineered Materials Inc.

In one embodiment, the crosslinking agent may be an acrylate. In another embodiment, the acrylate may be allyl acrylate, glycerol diacrylate, glycerol triacrylate, ethylene glycol diacrylate, diethylene glycol diacrylate, triethylene glycol dimethacrylate, 1,6-hexanediol diacrylate, 1,3-propanediol diacrylate, 1, 3-propanediol dimethacrylate, trimethylolpropane triacrylate, 1,2,4- butanetriol trimethacrylate, 1,4-cyclohexanediol diacrylate, pentaerythritol triacrylate, pentaerythritol tetraacrylate, pentaerythritol tetramethacrylate, sorbitol hexaacrylate, bis[1-(2- acryloxy)]-p-ethoxyphenyldi-methylmethane, 2,2-bis[1-(3-acryloxy-2-hydroxy)]propoxyphenylpropane, tris(hydroxyethyl)isocyanurate trimethacrylate and bis-acrylates and bis-methacrylates of polyethylene glycols of average molecular weight 200-500 g/mol.

In one embodiment, crosslinking agent may be a perfluorovinyl ether. In one embodiment, the perfluorovinyl ether has the structure: 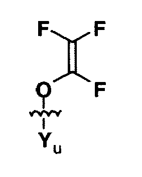 wherein Y is a divalent organic or inorganic radical of valence u and u is an integer from 1 to 1000, including a range from 2 to 8 and a range from 2 to 4.

Perfluorovinyl ethers are typically synthesized from phenols and tetrabromotetrafluoroethane followed by zinc catalyzed reductive elimination producing ZnFBr and the desired perfluorovinylether. By this route, bis, tris and other polyphenols can produce bis-, tris- and other poly(perfluorovinylether)s. In one embodiment, phenolic compounds include: resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)bisphenol (bisphenol P), 4,4'-ethylidenediphenol (bisphenol E), 4,4'oxydiphenol, 4,4'thiodiphenol, 4,4'thiobis(2,6-dimethylphenol), 4,4'-sufonyldiphenol, 4,4'-sufonylbis(2,6-dimethylphenol) 4,4'sulfinyldiphenol, 4,4'-hexafluoroisoproylidene)bisphenol (Bisphenol AF), 4,4'(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol and the like.

Cyanoesters include, but are not limited to, dicyanatobenzene, 2,5-di-t-butyl-1,4-dicyanatobenzene, 2,5-di-t-butyl-1,3-dicyanatobenzene, 4-chloro-1,3-dicyanatobenzene, 1,3,5-tricyanatobenzene, 4,4'-cyanatobiphenyl 2,2'-dicyanatobiphenyl, 2,4-dimethyl-1,3-dicyanatobenzene, tetramethyldicyanatobenzene, 1,3- dicyanatonaphthalene, 1, 4- dicyanatonaphthalene, 1,5- dicyanatonaphthalene, 1,6- dicyanatonaphthalene, 1,8- dicyanatonaphthalene, 2,6-dicyanatonaphthalene, 2,7-dicyanatonaphthalene, 2,2-bis(3,5-dibromo-4-cyanatophenyl)propane 1,3,6-tricyanatonapthalene, 2,2-bis(4-cyanatophenyl)propane, bis(4-cyanatophenyl)methane, bis(3-chloro-4-cyanatophenyl)methane bis(3,5-dimethyl-4-cyanatophenyl)methane, 1,3-bis[4-cyanatophenyl-1-(1-methylethylidene)]benzene, 1,1,1-tris(4- cyanatophenyl)ethane, 1,4-bis[4-cyanatophenyl-1-(1-methylethylidene)]-benzene, and mixtures thereof, and the cyanate ester prepolymer is selected from the group consisting of prepolymers of 2,2-bis(4-cyanatophenyl)-propane, bis(3,5-dimethyl-4-cyanatophenyl)methane, 1,3-bis[4-cyanatophenyl-1-(1-methylethylidene)]benzene, 1,4-bis[4-cyanatophenyl-1-(1-methylethylidene)]benzene, bis(4-cyanatophenyl)ether, bis(p- cyanophenoxyphenoxy)benzene, di(4-cyanatophenyl)ketone, bis(4- cyanatophenyl)thioether, bis(4-cyanatophenyl)sulfone, tris(4- cyanatophenyl)phosphite, and tris(4-cyanatophenyl)phosphate.

In one embodiment, the crosslinking agents may be greater than about 0.1 weight percent based on the weight of the primer. In one embodiment, the amount of cross-linking agent present may be in a range of from about 0.5 weight percent to about 75 weight percent, based on the total weight of the primer. In another embodiment, the crosslinking agent is present from about 5 weight percent to about 60 weight percent, based on the total weight of the primer. In another embodiment, the crosslinking agent is present from about 10 weight percent to about 50 weight percent, based on the total weight of the primer. In another embodiment, the crosslinking agent is present from about 20 weight percent to about 40 weight percent, based on the total weight of the primer.

In another embodiment, when the primer has been applied by supercritical carbon dioxide deposition, the crosslinking agents may be dissolved or dispersed in a fluid containing gaseous carbon dioxide. The crosslinking agents may be added to the carbon dioxide solution in an amount of from about 0.1% by volume to about 10% by volume, based on the volume of the carbon dioxide. In another embodiment, the crosslinking agents may be in an amount of from about 1% by volume to about 7% by volume, based on the volume of the carbon dioxide. In another embodiment, the crosslinking agents may be in an amount of from about 1% by volume to about 5% by volume, based on the volume of the carbon dioxide.

The primer may be crosslinked at ambient or elevated temperature. In one embodiment, the primer is crosslinked at a temperature from about room temperature to about 250°C. In another embodiment, the primer is crosslinked at a temperature from about 40°C to about 200°C.

A radical initiator may be used to enhance the crosslinking reaction. In one embodiment, the radical initiator may be azobisisobutylonitrile (AIBN), 4,4'-azobis(4-cyanovaleric acid), 2,2'-azobis(2-amidinopropane)hydrochloride, ammonium persulfate, potassium persulfate, potassium hydrogen persulfate or peroxide. In one embodiment, the peroxide includes, but is not limited to, hydrogen peroxide, 2,5-dimethyl-2,5-di(tert-butylperoxy)hexane,dicumyl peroxide, alpha,alpha dimethylbenzyl hydroperoxide, alpha-bis(t-butyl peroxyisopropyl)benzene or 2.5-dimethyl-2.5-di(t-butyl peroxy) hexane or the like. The amount of radical initiator is typically catalytic. In one embodiment, the amount of radical initiator is from about 0.1 to 20 mol percent. In another embodiment, the amount is from about 1 to about 5 mol percent.

In one embodiment, the primer is a vinylidene difluoride co-polymer, which may be coated onto the base membrane as a sulfonyl fluoride and then crosslinked using a radical initiator and a crosslinking agent. In a preferred embodiment, the crosslinking is achieved by using peroxide and triallylisocyanurate at elevated temperatures. In one exemplary embodiment, trimethyl silanoate sodium salt in polar solvents is used to chemically convert the sulfonyl fluoride. Once converted to the sulfonic acid derivative, the primer can be acidified to form a sulfonic acid functional coating.

Nucleophilic substitution chemistry can result in crosslinked primers. In one embodiment, crosslinking agents for nucleophilic substitution chemistry crosslinking reactions include use of bis-, tris, and multi-functionized phenols, amines, and thiols.

In one embodiment, phenolic compounds include: resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)bisphenol (bisphenol P), 4,4'-ethylidenediphenol (bisphenol E), 4,4'oxydiphenol, 4,4'thiodiphenol, 4,4'thiobis(2,6-dimethylphenol), 4,4'-sufonyldiphenol, 4,4'-sufonylbis(2,6-dimethylphenol) 4,4'sulfinyldiphenol, 4,4'-hexafluoroisoproylidene)bisphenol (Bisphenol AF), 4,4'(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol and the like.

Examples of the amine compounds include, but are not limited to, aliphatic amine compounds, such as diethylene triamine (DETA), triethylene tetramine (TETA), tetraethylene pentamine (TEPA), diethylaminopropylamine (DEAPA), methylene diamine, N-aminoethylpyrazine (AEP), m-xylylene diamine (MXDA) and the like; aromatic amine compounds such as m-phenylene diamine (MPDA), 4,4'-diaminodiphenylmethane (MDA), diaminodiphenylsulfone (DADPS), diaminodiphenyl ether and the like; and secondary or tertiary amine compounds such as phenylmethyldimethylamine (BDMA), dimethylaminomethylphenol (DMP-10), tris(dimethylaminomethyl)phenol (DMP-30), piperidine, 4,4'-diaminodicyclohexylmethane, 1,4-diaminocyclohexane, 2,6-diaminopyridine, m-phenylenediamine, p-phenylenediamine, 4,4'-diaminodiphenylmethane, 2,2'-bis(4-aminophenyl)propane, benzidine, 4,4'-diaminophenyl oxide, 4,4'-diaminodiphenylsulfone, bis(4-aminophenyl)phenylphosphone oxide, bis(4-aminophenyl)methylamine, 1,5-diaminonaphthalene, m-xylenediamine, p-xylenediamine, hexamethylenediamime, 6,6'-diamine-2,2'-pyridyl, 4,4'-diaminobenzophenone, 4,4'-diaminoazobenzene, bis(4-aminophenyl)phenylmethane, 1,1-bis(4-aminophenyl)cyclohexane, 1,1-bis(4-amino-3-methylphenyl)cyclohexane, 2,5-bis(m-aminophenyl)-1,3,4-oxadiazole, 2,5-bis(p-aminophenyl)-1,3,4-oxadiazole, 2,5-bis(m-aminophenyl)thiazo(4,5-d)thiazole, 5,5'-di(m-aminophenyl)-(2,2')-bis-(1,3,4-oxadiazolyl), 4,4'-diaminodiphenylether, 4,4'-bis(p-aminophenyl)-2,2'-dithiazole, m-bis(4-p-aminophenyl-2-thiazolyl)benzene, 4,4'-diaminobenzanilide, 4,4'-diaminophenyl benzoate, N,N'-bis(4-aminobenzyl)-p-phenylenediamine, and 4,4'-methylenebis(2-chloroaniline); melamine, 2-amino-s-triazine, 2-amino-4-phenyl-s-triazine, 2-amino-4-phenyl-s-triazine, 2-amino-4,6-diethyl-s-triazine, 2-amino-4,6-diphenyl-s-triazine, 2-amino-4,6-bis(p-methoxyphenyl)-s-triazine, 2-amino-4-anilino-s-triazine, 2-amino-4-phenoxy-s-triazine, 2-amino-4-chloro-s-triazine, 2-amino-4-aminomethyl-6-chloro-s-triazine, 2-(p-aminophenyl)-4,6-dichloro-s-triazine, 2,4-diamino-s-triazine, 2,4-diamino-6-methyl-s-triazine, 2,4-diamino-6-phenyl-s-triazine, 2,4-diamino-6-benzyl-s-triazine, 2,4-diamino-6-(p-aminophenyl)-s-triazine, 2,4-diamino-6-(m-aminophenyl)-s-triazine, 4-amino-6-phenyl-s-triazine-2-ol and 6-amino-s-triazine-2,4-diol.

In one embodiment, thiolate compounds include include aliphatic thiol compounds such as 1,2-ethanethiol, 1,3-propanethiol, 1,4-butanediol, 1,3-Butanedithiol, 2,3-Butanedithiol, 1,5-Pentanedithiol, 1,6-Hexanedithiol, 1,14-Tetradecanedithiol, 2,2-didecyl-1,3-propanedithiol, 2,2-dimethyl-1,3-Propanedithiol, and the like; and aromatic thiol compounds such as 1,2-benzenedithiol, 1,3-benzenedithiol, 1,4-benzenedithiol, 4-methyl-1,2-benzenedithiol, 3,4-dimercapto-phenol, 3,6-dichloro-1,2-benzenedithiol, 4-chloro-1,3-benzenedithiol, 9,10-anthracenedithiol, 1,3,5-benzenetrithiol, 1,1'-biphenyl-4,4'-dithiol, 4,4'-oxybis[benzenethiol], 4,4'-thiobis[benzenethiol], 4,4'-methylenebis[benzenethiol], 4,4'-(1-methylethylidene)bis[benzenethiol], 1,4-phenylenebis[(4-mercaptophenyl)methanone, 4,4'-sulfonylbis[benzenethiol], bis(4-mercaptophenyl)methanone, 3,7-Dibenzofurandithiol, 4,4'-sulfonylbis[2-chloro-benzenethiol, 4,4'-[2,2,2-trifluoro-1-(trifluoromethyl)ethylidene]bis[benzenethiol], and the like.

The ion exchange material is infiltrated into the compatibilized membrane to the coated internal and external surfaces. The base membrane is impregnated with an ion exchange material by any suitable method. In one embodiment, the ion exchange material is impregnated into the membrane by vacuum deposition or solution deposition. For solution deposition, a solution is prepared comprising the ion exchange material, a solvent and optionally, a surfactant. The solvent may be any type of solvent that dissolves the ion exchange material to make a solution, but does not dissolve the primer on the base membrane. The solution may be applied to the membrane by any conventional coating technique to penetrate into the pores of the base membrane, such as forward roll coating, reverse roll coating, gravure coating, doctor coating, kiss coating, dipping, brushing, painting and spraying. Solution deposition is described in United States Reissue Patent No. RE37,307, which is incorporated herein by reference. Excess solution may be removed from the surface of the base membrane. The composite membrane may be heated to dry, such as by placing the membrane into an oven to dry, which causes the ion exchange material to become securely adhered to the coating. Heating temperatures range may range from about 60°C to about 300°C. Solution application steps and drying steps may be repeated as desired.

Vacuum deposition is an effective way to impregnate ion exchange materials into pores of the base membrane to evenly coat the surfaces of the nodes and fibrils. In vacuum deposition, the ion exchange material is drawn into the coated base membrane by vacuum suction using a vacuum microfiltration assembly.

The amount of ion exchange material may be an amount suitable to completely occlude or to substantially occlude the pores in the base membrane. This enables a continuous path to be established for conducting protons through the thickness of the membrane. In one exemplary embodiment, composite membrane 20 in Figure 2 includes an ion exchange material 48 applied to the primer coating 24 on base membrane 22. In this exemplary embodiment, ion exchange material 48 substantially fills pores 46 and adheres to primer 24.

In one embodiment, the weight ratio of ion exchange material to base membrane is from about 1:10 to about 10:1. In another embodiment, the weight ratio of the ion exchange material to the base membrane is about 1:1 to about 10:1.

The composite membrane may have a thickness of from about 0.25 mil to about 10 mils. In another embodiment, the composite membrane may have a thickness in a range of from about 0.5 mil to about 5 mils. In another embodiment, the composite membrane may have a thickness from about 0.75 mil to about 3 mils.

In another embodiment, a method of making a composite membrane with ion exchange properties is provided. The method includes compatibilizing a porous base membrane and impregnating the compatibilized porous base membrane with an ion exchange material, wherein the porous base membrane is compatibilized by coating a primer to external and internal surfaces of the porous base membrane crosslinking the primer.

The porous base membrane, primer, ion exchange material and steps for coating the primer to external and internal surfaces of the porous base membrane and crosslinking the primer are described above.

In another embodiment, a proton exchange membrane for a fuel cell is provided. The proton exchange membrane includes a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer. The porous base membrane, primer, ion exchange material and steps for coating the primer to external and internal surfaces of the porous base membrane and crosslinking the primer are described above.

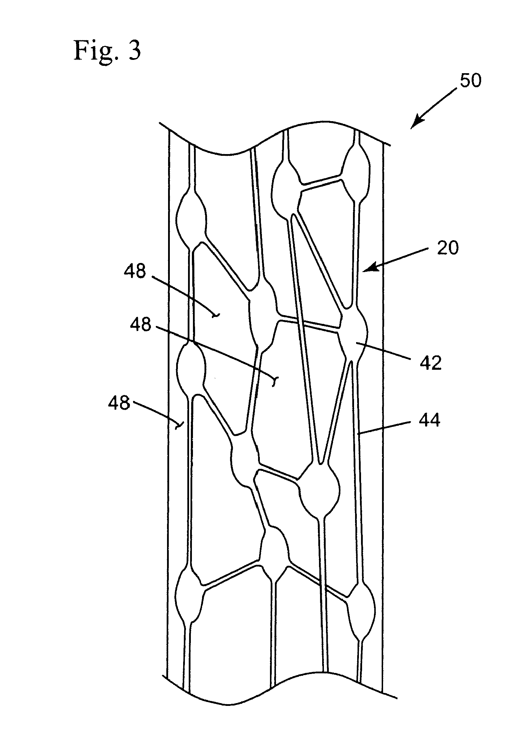

Figure 3 is an exemplary embodiment of a schematic illustration of a proton exchange membrane 50 that includes a composite membrane 20.

In another embodiment, a method of making a proton exchange membrane for a fuel cell is provided. The method includes compatibilizing a porous base membrane and impregnating the compatibilized porous base membrane with an ion exchange material, wherein the porous base membrane is compatibilized by coating a primer to external and internal surfaces of the porous base membrane crosslinking the primer.

The porous base membrane, primer, ion exchange material and steps for coating the primer to external and internal surfaces of the porous base membrane and crosslinking the primer are described above.

There are numerous uses for a porous membrane having a property or characteristic that has been changed or modified. For example, a composite membrane can be used as a proton exchange membrane (PEM) in a fuel cell or to be employed in other applications, including, but not limited to, liquid filtration, water purification, polarity-based chemical separations, cation-exchange resins, chemical separations, gas separations, electrolysis, SO₂ electrolysis, batteries, pervaporization, gas separation, dialysis separation, industrial electrochemistry, such as chloralkali production and electrochemical applications, super acid catalysts, or use as a medium in enzyme immobilization.

In order that those skilled in the art will be better able to practice the present disclosure, the following examples are given by way of illustration and not by way of limitation.

### EXAMPLES

### EXAMPLE 1

An ePTFE membrane with dimensions of about 12" by 12" and a thickness of 0.003 in. was uniformly coated with a modified VF₂-primer by supercritical carbon dioxide deposition in a vessel. The coating was then radically crosslinked by subjecting the membrane to a solution of 1% by volume triallylisocyanurate, 0.4% by volume toluene di-isocyanate and 0.1% by volume 2,5-dimethyl-2,5-di(tert-butylperoxy)hexane (available commercially as TRIGONOX^{®} 101 from Akzo Nobel Chemicals),in supercritical carbon dioxide at 40°C and 1900 psi. The peroxide made up approximately 3 mole % of the crosslinking composition. The pressure was slowly lowered to 250 psi in the vessel and the vessel was heated to 200°C. After a period of 10 minutes, the vessel was cooled and vented and the membrane was removed.

The primer was converted to the sodium sulfonated salt via post-treatment with trimethyl silonate sodium salt. The membrane was placed into a shallow treatment pan and 20mL of 0.15M trimethyl silonate sodium salt in chloroform was syringed onto the membrane. After a period of about 10 minutes, the membrane was transferred to another shallow treatment pan and rinsed with about 150 mL of chloroform. After treatment, the membrane was estimated to have a VF₂-primer content of about 20% by weight and an estimated sulfonate content of 700 eq.wt.

The VF₂-ePTFE was completely wetted out in an ion exchange material, 5% PFSA (Nafion® 117 from Dupont having a sulfonate level is of 1100 equivalent weight and an ion exchange capacity of 0.91 meq/g) solution in solvent (20% solution of the PFSA in isopropanol/water mix) using a vacuum microfiltration assembly. The ePTFE was mounted and the PFSA solution was deposited by vacuum suction (27 in. Hg). The ePTFE was flipped onto its backside and the vacuum deposition was repeated. The base membrane was impregnated with the PFSA in a ratio of 2:1. The wet ePTFE was dried at 130°C for 1 minute, and the overall procedure was repeated until no filtrate could be pulled through the apparatus.

The dried membrane was sandwiched between two translucent PFSA-SO₂F (Nafion® EW 920 from Dupont) films (0.5-1 mil in thickness), placed between two chrome-plated aluminum plates covered with non-stick aerosol spray (Teflon® and other fluorinated solvents), and positioned centrally in a Tetrahedron Hot Press at 240°C. The plates were hot pressed at 240°C at contact pressure for 5 minutes, then 1 minute at 4000 psi and 1 minute at 8000 psi. The plates were removed and cooled to room temperature at 8000 psi. The translucent membranes were acidified. The translucent membranes were soaked in 35 ml of 2M KOH and 10 ml dimethylsulfoxide (DMSO) at room temperature for 1 day. The translucent membranes were soaked in water for 2 hrs and acidifying in 1M H₂SO₄ for 1 day. The translucent membranes were then soaked in water for 2 hrs and air dried. The membrane had a final composition of 10% ePTFE, 1% primer and 89% ion exchange material.

While typical embodiments have been set forth for the purpose of illustration, the foregoing descriptions should not be deemed to be a limitation on the scope herein. Accordingly, various modifications, adaptations and alternatives may occur to one skilled in the art without departing from the spirit and scope herein.

For completeness, various aspects of the invention are now set out in the following numbered clauses:
1. A composite membrane comprising a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.
2. The composite membrane of clause 1, wherein the ion exchange material is an ionomer comprising perfluorosulfonic acid ionomers, aromatic polymers having fluoroalkylsulfonate groups, partially fluorinated sulfonated ionomers, perfluoroalkyl-based ionomers, sulfonated aromatic polymers, polyimidazole with phosphoric acid, sulfonated polyethersulfone, sulfonated poly(ether etherketones), sulfonated polypropylene oxide, sulfonated polyimides, sulfonated polyetherimides, sulfonated polyesters, chlorosulfonated polyethylene or sulfonated poly(phenylene sulfide).
3. The composite membrane of clause 2, wherein the perfluoroalkyl-based ionomers comprise polytetrafluoroethylene sulfonic acid or polyperfluorosulfonic acid ionomer.
4. The composite membrane of clause 2, wherein the partially fluorinated ulfonated ionomers comprise sulfonated styrene polyvinylidene difluoride-based copolymers, poly(α,β,β-trifluoromethylstyrene sulfonic acid) or aromatic polymers having organic fluorosulfonic acid groups or derivatives thereof.
5. The composite membrane of any preceding clause, wherein the porous base membrane comprises polytetrafluoroethylene, polyolefin, polyamide, polyester, polysulfone, polyether, acrylic and methacrylic polymers, polystyrene, polyurethane, polypropylene, polyethylene, polyphenylene sulfone, cellulosic polymer or combinations thereof.
6. The composite membrane of clause 5, wherein the porous base membrane comprises expanded polytetrafluoroethylene.
7. The composite membrane of any preceding clause, wherein the coated primer has a uniform thickness in a range of from about 1.0 nanometer to about 500 nanometers.
8. The composite membrane of any preceding clause, wherein the primer comprises a fluorinated vinyl-based copolymer having sulfonyl functionality, a hydrocarbon-based polymer containing random sulfonation, a hydrocarbon-based polymer containing blocky, mixed or gradient sulfonation, a partially fluorinated block copolymer containing a sulfonated hydrophilic segment, a hydrophobic fluorinated segment, vinylic-based, acrylic-based or styrenic-based polymers and copolymers and poly(vinyl acetate)-based polymers.
9. The composite membrane of any preceding clause, wherein the primer is a vinylidene difluoride copolymer.
10. The composite membrane of clause 9, wherein the primer is a vinylidene difluoride and sulfonated perfluoroalkyl vinyl ether copolymer having the structure: 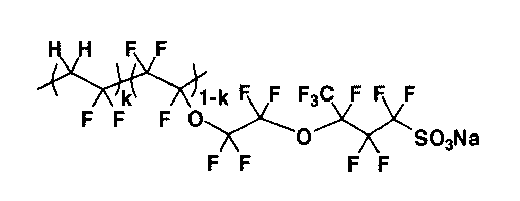 wherein k is from about 0 to about 0.99.
11. The composite membrane of clause 8, wherein the primer comprises perfluorosulfonic acid, sodium sulfonated-perfluorosulfonic acid, sulfonyl fluoride-perfluorosulfonic acid or sodium perfluorosulfonate polymer.
12. The composite membrane of any preceding clause, wherein the ion exchange material at least substantially occludes the pores in the base membrane.
13. The composite membrane of any preceding clause, wherein the weight ratio of the ion exchange material to the base membrane is from about 1:10 to about 10:1.
14. A method of making a composite membrane comprising compatibilizing a porous base membrane and impregnating the compatibilized porous base membrane with an ion exchange material, wherein the porous base membrane is compatibilized by coating a primer to external and internal surfaces of the porous base membrane crosslinking the primer.
15. The method of clause 14, wherein the ion exchange material is an ionomer comprising perfluorosulfonic acid ionomers, aromatic polymers having fluoroalkylsulfonate groups, partially fluorinated sulfonated ionomers, perfluoroalkyl-based ionomers, sulfonated aromatic polymers, polyimidazole with phosphoric acid, sulfonated polyethersulfone, sulfonated poly(ether etherketones), sulfonated polypropylene oxide, sulfonated polyimides, sulfonated polyetherimides, sulfonated polyesters, chlorosulfonated polyethylene or sulfonated poly(phenylene sulfide).
16. The method of clause 15, wherein the perfluoroalkyl-based ionomers comprise polytetrafluoroethylene sulfonic acid or polyperfluorosulfonic acid ionomer.
17. The method of clause 15, wherein the partially fluorinated sulfonated ionomers comprise sulfonated styrene polyvinylidene difluoride-based copolymers, poly(α,β,β-trifluoromethylstyrene sulfonic acid) or aromatic polymers having organic fluorosulfonic acid groups or derivatives thereof.
18. The method of any one of clauses 14 to 17, wherein the base membrane comprises polytetrafluoroethylene, polyolefin, polyamide, polyester, polysulfone, polyether, acrylic and methacrylic polymers, polystyrene, polyurethane, polypropylene, polyethylene, polyphenylene sulfone, cellulosic polymer or combinations thereof.
19. The method of clause 18, wherein the porous base membrane comprises expanded polytetrafluoroethylene.
20. The method of any one of clauses 14 to 19, wherein the primer is applied to the base membrane by solution deposition, high pressure solution deposition, vacuum filtration, painting, gravure coating, air brushing or by supercritical carbon dioxide deposition.
21. The method of any one of clauses 14 to 20, wherein the coated primer has a uniform thickness in a range of from about 1.0 nanometer to about 500 nanometers.
22. The method of any one of clauses 14 to 21, wherein the primer comprises a fluorinated vinyl-based copolymer having sulfonyl functionality, a hydrocarbon-based polymer containing random sulfonation, a hydrocarbon-based polymer containing blocky, mixed or gradient sulfonation, a partially fluorinated block copolymer containing a sulfonated hydrophilic segment, a hydrophobic fluorinated segment, vinylic-based, acrylic-based or styrenic-based polymers and copolymers or poly(vinyl acetate)-based polymers.
23. The method of any one of clauses 14 to 22, wherein the primer is a vinylidene difluoride copolymer.
24. The method of any one of clauses 14 to 22, wherein the primer comprises perfluorosulfonic acid, sodium sulfonated-perfluorosulfonic acid, sulfonyl fluoride-perfluorosulfonic acid or sodium perfluorosulfonate polymer.
25. The method of one of clauses 14 to 24, wherein the primer is crosslinked thermally, by UV, e-beam, corona, plasma or chemically.
26. The method of any one of clauses 14 to 25, wherein the primer is crosslinked with a crosslinking agent.
27. The method of clause 26, wherein the crosslinking agent comprises isocyanurate, blocked isocyanurate, urethane, acrylates, methacrylates, vinyl, allyl, vinyl ether, perfluorovinyl ether, bis-benzocyclobutene, vinylketone, acetylene, cyanoester or benzyl and benzyl ethers.
28. The method of clause 27, wherein the crosslinking agent is triallylisocyanurate.
29. The method of any one of clauses 14 to 28, wherein the ion exchange material is impregnated by solution deposition, vacuum deposition, forward roll coating, reverse roll coating, gravure coating, doctor coating, kiss coating, dipping, brushing, painting and spraying.
30. The method of clause 29, wherein the ion exchange material is impregnated into the membrane by vacuum deposition or solution deposition.
31. The method of any one of clauses 14 to 30, wherein the ion exchange material at least substantially occludes the pores in the base membrane.
32. The method of any one clauses 14 to 31, wherein the weight ratio of the ion exchange material to the base membrane is from about 1:10 to about 10:1.
33. A proton exchange membrane comprising a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.
34. A method of making a proton exchange membrane for a fuel cell comprising compatibilizing a porous base membrane and impregnating the compatibilized porous base membrane with an ion exchange material, wherein the porous base membrane is compatibilized by coating a primer to external and internal surfaces of the porous base membrane and crosslinking the primer.

## Claims

1. A composite membrane comprising a compatibilized porous base membrane and an ion exchange material, said ion exchange material impregnating the compatibilized porous base membrane, wherein the porous base membrane is compatibilized by coating a primer to external and internal surfaces of the porous base membrane and crosslinking the primer.

2. The composite membrane of claim 1, wherein the ion exchange material is an ionomer comprising perfluorosulfonic acid ionomers, aromatic polymers having fluoroalkylsulfonate groups, partially fluorinated sulfonated ionomers, perfluoroalkyl-based ionomers, sulfonated aromatic polymers, polyimidazole with phosphoric acid, sulfonated polyethersulfone, sulfonated poly(ether etherketones), sulfonated polypropylene oxide, sulfonated polyimides, sulfonated polyetherimides, sulfonated polyesters, chlorosulfonated polyethylene or sulfonated poly(phenylene sulfide).

3. The composite membrane of claim 2, wherein the perfluoroalkyl-based ionomers comprise polytetrafluoroethylene sulfonic acid or polyperfluorosulfonic acid ionomer.

4. The composite membrane of claim 2, wherein the partially fluorinated sulfonated ionomers comprise sulfonated styrene polyvinylidene difluoride-based copolymers, poly(α,β,β-trifluoromethylstyrene sulfonic acid) or aromatic polymers having organic fluorosulfonic acid groups or derivatives thereof.

5. The composite membrane of any preceding claim, wherein the porous base membrane comprises polytetrafluoroethylene, polyolefin, polyamide, polyester, polysulfone, polyether, acrylic and methacrylic polymers, polystyrene, polyurethane, polypropylene, polyethylene, polyphenylene sulfone, cellulosic polymer or combinations thereof.

6. The composite membrane of claim 5, wherein the porous base membrane comprises expanded polytetrafluoroethylene.

7. The composite membrane of any preceding claim, wherein the coated primer has a uniform thickness in a range of from about 1.0 nanometer to about 500 nanometers.

8. The composite membrane of any preceding claim, wherein the primer comprises a fluorinated vinyl-based copolymer having sulfonyl functionality, a hydrocarbon-based polymer containing random sulfonation, a hydrocarbon-based polymer containing blocky, mixed or gradient sulfonation, a partially fluorinated block copolymer containing a sulfonated hydrophilic segment, a hydrophobic fluorinated segment, vinylic-based, acrylic-based or styrenic-based polymers and copolymers and poly(vinyl acetate)-based polymers.

9. The composite membrane of any preceding claim, wherein the primer is a vinylidene difluoride copolymer.

10. The composite membrane of claim 9, wherein the primer is a vinylidene difluoride and sulfonated perfluoroalkyl vinyl ether copolymer having the structure: 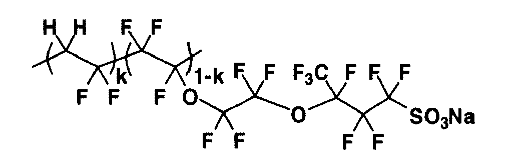 wherein k is from about 0 to about 0.99.

11. The composite membrane of claim 8, wherein the primer comprises perfluorosulfonic acid, sodium sulfonated-perfluorosulfonic acid, sulfonyl fluoride-perfluorosulfonic acid or sodium perfluorosulfonate polymer.

12. The composite membrane of any preceding claim, wherein the ion exchange material at least substantially occludes the pores in the base membrane.

13. The composite membrane of any preceding claim, wherein the weight ratio of the ion exchange material to the base membrane is from about 1:10 to about 10:1.

14. A method of making a composite membrane comprising compatibilizing a porous base membrane and impregnating the compatibilized porous base membrane with an ion exchange material, wherein the porous base membrane is compatibilized by coating a primer to external and internal surfaces of the porous base membrane crosslinking the primer.

15. The method of claim 14, wherein the ion exchange material is an ionomer comprising perfluorosulfonic acid ionomers, aromatic polymers having fluoroalkylsulfonate groups, partially fluorinated sulfonated ionomers, perfluoroalkyl-based ionomers, sulfonated aromatic polymers, polyimidazole with phosphoric acid, sulfonated polyethersulfone, sulfonated poly(ether etherketones), sulfonated polypropylene oxide, sulfonated polyimides, sulfonated polyetherimides, sulfonated polyesters, chlorosulfonated polyethylene or sulfonated poly(phenylene sulfide).
